# EUROPEAN PATENT SPECIFICATION

(11) **EP 3 933 637 B1**
(45) Date of publication and mention of the grant of the patent: **16.08.2023**
(21) Application number: 20182804.3
(22) Date of filing: 29.06.2020
(51) Int. Cl.: G06F 21/64, H04L 9/00

(54) **METHOD AND SYSTEM FOR DEPLOYING A SMART CONTRACT IN A BLOCKCHAIN NETWORK**
VERFAHREN UND SYSTEM ZUM EINSATZ EINES INTELLIGENTEN VERTRAGS IN EINEM BLOCKCHAIN-NETZWERK
PROCÉDÉ ET SYSTÈME POUR DÉPLOYER UN CONTRAT INTELLIGENT DANS UN RÉSEAU DE CHAÎNE DE BLOCS

(43) Date of publication of application: 05.01.2022
(73) Proprietor: Blockchain 4 All Limited, Cork City, Cork T12TN2E (IE)
(72) Inventor: Fares, Samir Moriss Gerges, Cork T12 TN2E (IE)

(56) References cited:
- CN-A- 107 844 294
- US-A1- 2020 201 838

## Description

### Field

The present disclosure relates to a method and system for deploying a smart contract in a blockchain network, and more particularly to a method and system for a deploying a smart contract in a blockchain network.

### Background of Invention

A blockchain is essentially a distributed ledger with an incremental list of records called blocks which are linked together and secured using cryptography, forming a chain in the process. Copies of this chain are stored and made available to several peers on a network who can see the chain and its contents. To add a new block, a peer must first find a key to a random pattern generated using cryptography and verify the block he/she intends to add. Each block contains a cryptographic hash of the previous block, a timestamp and transaction data. The event of addition of a new block is broadcasted to all the other peers on the network so that each of the peers can update their copies of the blockchain. A blockchain can be public or private depending on access rights. It is secure since it uses cryptography to create transactions which are almost impossible to tamper with. Blockchains hence eliminate the risk of storing records in a traditional ledger which is vulnerable to hacking and manipulation.

Smart contracts are applications deployed on blockchain networks such as Ethereum. Smart contracts are basically self-executing contracts wherein the terms and conditions of an agreement between two or more parties are written into lines of software code. The code and the agreements contained therein exist across a blockchain network. Smart contracts allow trusted transactions and agreements to be carried out among disparate, anonymous parties without the need for a central authority or a legal system or an external enforcement mechanism. They render transactions traceable, transparent, and irreversible.

Conventional blockchain networks use custom-built programming languages for deploying smart contracts. Solidity, for example, is the primary programming language used for developing and deploying smart contracts in an Ethereum blockchain network. Likewise, `Pact' is used for deploying smart contracts in a Kadena blockchain network, and 'Liquidity is used for deploying smart contracts in a Tezos blockchain network. Such custom-built programming languages are generally tied to the specific blockchain network it is designed for and is not compatible with other blockchain networks. Further, they are generally complicated and difficult to use in comparison to traditional and commonly used programming languages, and they cannot communicate with a blockchain network independently without usage of traditional programming languages such as Javascript.

It is known in the art that traditional programming languages can be used to communicate with existing or already deployed smart contracts using standard interfaces. For example, C sharp (C#) and HyperText Preprocessor (PHP) can be used by a programmer to communicate with smart contracts deployed in Ethereum using remote procedure calls. Prior art methods and systems, however, do not disclose means to use traditional programming languages such as C#, Visual Basic, PHP etc., to deploy smart contracts in blockchain networks.

There is therefore an unresolved and unfulfilled need in the art for a system and method which enables usage of traditional and commonly used computer programming languages to deploy smart contracts in a blockchain network.

Prior art document US2020/0201838-A1 discloses a method for automated verification of a smart contract on a blockchain by translating operating properties of a smart contract annotated with contract specifications.

### Summary of the Invention

The present invention relates to a system and method for deploying a smart contract in a programmable blockchain network using a platform agnostic traditional programming language, as set out in the appended claims, using instructions written in a traditional programming language agnostic to the blockchain network, such as a scripting language or an object-oriented programming language. The present invention provides a system and a method for deploying a smart contract in a programmable blockchain network using a platform agnostic traditional programming language. In addition the invention provides an interface which enables the deployment of smart contracts in a blockchain network using a platform agnostic traditional programming language.

In one embodiment of the present invention, there is provided a computing device implemented method for deploying a smart contract in a blockchain network. The method comprises the steps of firstly inputting a plurality of instructions written in a traditional programming language agnostic to the blockchain network. Such programming language may be, for example, a scripting language such as PHP or Visual Basic, or an object-oriented programming language such as C#. The method further comprises the steps of initializing a software module comprising a predefined set of a plurality of special variable types, defining a plurality of variable names and declaring a plurality of variable types included in the plurality of instructions, defining a plurality of function names included in the plurality of instructions, and defining a plurality of variable names and declaring a plurality of variable types outputted by the plurality of instructions.

The plurality of instructions is further converted to bytecode or operation code which is compatible with the blockchain network. Based on the bytecode or the operation code as the case maybe, a smart contract is generated, and the generated smart contract is deployed to the blockchain network.

As per another preferred embodiment of the present invention, a system for deploying a smart contract in a blockchain network is provided. The system comprises a computing device and a memory means. The memory means is operatively coupled to the computing device and is adapted to store a plurality of instructions written in a traditional programming language which is agnostic to the blockchain network. The computing device is characterized by an application binary interface.

The application binary interface is configured to receive the plurality of instructions inputted by a user, initialize a software module comprising a predefined set of special variable types, define a plurality of variable names and declare a plurality of variable types included in the plurality of instructions, define a plurality of function names included in the plurality of instructions, and define a plurality of variable names and declare a plurality of variable types outputted by the plurality of instructions. The application binary interface is further configured to convert the plurality of instructions to byte code or operation code which is compatible with the blockchain network. Based on the bytecode or operation code, a smart contract is generated which is in turn deployed to the blockchain network. The system as per the present invention hence provides a platform to deploy smart contracts to blockchain networks using commonly used programming languages which are compatible with any blockchain network.

The method and system as per the present invention can be used to deploy smart contract applications in a plurality of programmable blockchain networks such as Ethereum, Quorum, Hyperledger Fabric etc. It will be appreciated that the system will work on any programmable blockchain network, that can accept deployed application / "smart contract", such as (but not limited to) Ethereum, NEO, Hyperledger Fabric, QTUM, Quorum, Cardano and the like.

Further, instructions can be inputted using any traditional computer programming language or commonly used programming language, for example, a scripting language such as PHP, or an object-oriented programming language such as C#. The present invention hence empowers users having knowledge of any traditional programming language to take advantage of the benefits of blockchain networks such as data security, data decentralization, data immutability and data transparency.

The present invention hence provides a robust and user-friendly solution to problems identified in the art.

### BRIEF DESCRIPTION OF DRAWINGS

The invention will be more clearly understood from the following description of an embodiment thereof, given by way of example only, with reference to the accompanying drawings, in which:-
Figure 1 is a flow diagram illustrating a method as per a preferred embodiment of the present invention.
Figure 2 is a schematic diagram illustrating a system as per a preferred embodiment of the present invention.
Figure 3 is a screenshot of sample source code illustrating definition of variables and functions names as per a preferred embodiment of the present invention.
Figure 4 is a screenshot of sample code illustrating declaration of variable types as per a preferred embodiment of the present invention.

### DETAILED DESCRIPTION OF DRAWINGS

The present invention relates to a method and system for deploying a smart contract in a programmable blockchain network, and more particularly to a method and system for a deploying a smart contract in a programmable blockchain network using instructions written in a traditional programming language agnostic to the blockchain network, such as a scripting language or an object-oriented programming language.

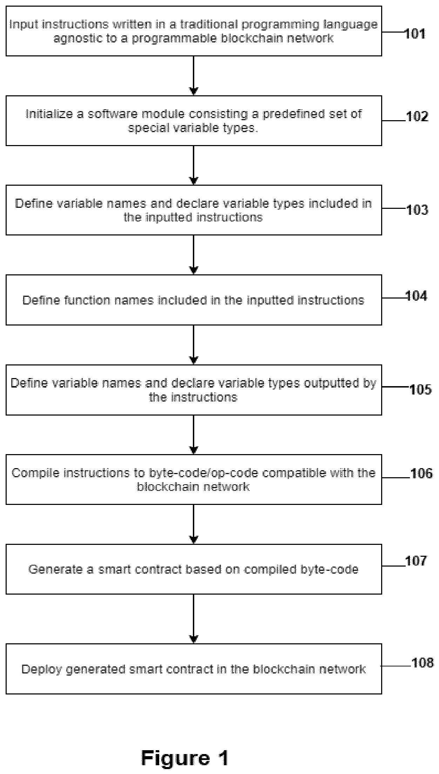

Figure 1 illustrates a method as per a preferred embodiment of the present invention. The method disclosed in the present invention is implemented using a computing device. The method comprises the steps of firstly inputting a plurality of instructions written in a traditional programming language which is agnostic to a programmable blockchain network 101. Traditional programming languages which are agnostic to a blockchain network includes all commonly used programming languages which are not specifically designed for or tied to a blockchain network, for example, scripting languages such as such as PHP or Visual Basic, or an object-oriented programming language such as C#.

The method further comprises the steps of defining a plurality of variable names and declaring a plurality of variable types included in the plurality of instructions 103, defining a plurality of function names included in the plurality of instructions 104, and defining a plurality of variable names and declaring a plurality of variable types outputted by the plurality of instructions 105 i.e., defining names and types of variables returned by functions included in the plurality of instructions. The steps of defining variable names and function names, and declaring variable types, is most important since a blockchain virtual machine processes only those instructions comprising variables which are correctly defined and declared. It might be possible that certain traditional programming languages do not recognize certain special variable types such as, "address", "block", "balance" etc. The method as per the present invention hence further comprises the step of initializing a software module comprising a predefined set of a plurality of special variable types 102 which can be used for declaring variable types included in instructions written in all traditional programming languages.

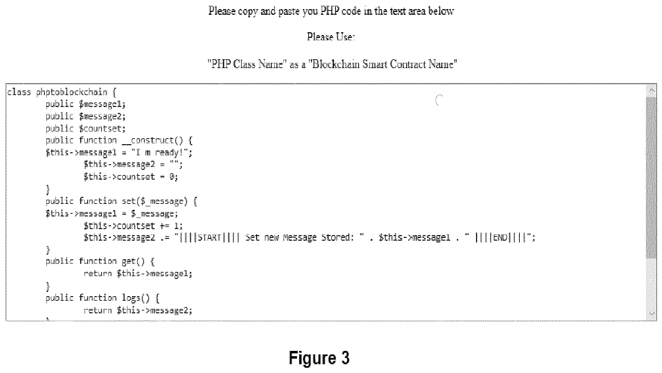

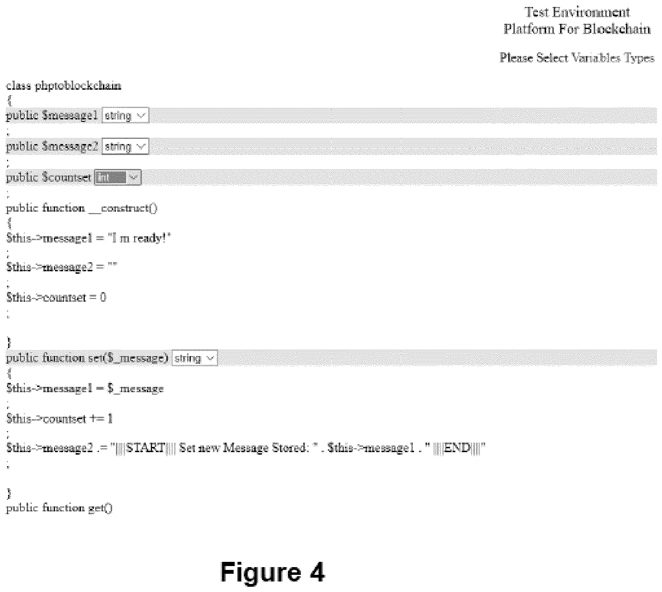

Figure 3 and Figure 4 are screenshots illustrating sample source code which enables the above-mentioned steps of defining variable names, defining function names, and declaring variable types. Figure 3 and Figure 4 shall be construed to be exemplary in nature. Said figures illustrate sample source code written in PHP as per a preferred embodiment of the present invention. As shown in Figure 3, a class *'phptoblockchain'* is first defined to declare the programming language as PHP, and thereafter variable names 'message 1', 'message 2', and 'countset', and functions names 'construct', 'get', 'set' and 'logs', are respectively defined. As shown in Figure 4, the variables 'message 1' and 'message 2' are declared as strings and the variable 'countset' is declared as an integer. Further, variables outputted by the sample code or returned from the function defined as 'set' are declared to be strings. In case the instructions include special variable types which may not be recognized by PHP, such special variable types are declared using the software module.

In another preferred embodiment of the present invention, the inputted instructions are written in C#. In said embodiment, the programming language firstly defined, i.e., it is first defined that the inputted instructions are written in C#. Further, variable names and function names are defined, and variable types are declared. In case the instructions include special variable types which may not be recognized by C#, such special variable types are declared using the software module.

Referring to Figure 1, the inputted instructions are converted or compiled to byte-code or operation code (opcode) that is compatible with the blockchain network 106 in which the code is to be deployed. The byte-code or opcode as the case maybe, is used to generate smart contract applications 107 which is in turn deployed to the blockchain network 108.

Defining variable names and function names, and declaring variable types, enables deployment of smart contract applications to a blockchain network using traditional programming languages. Defining function names further enables deployment of automatic instances of smart contracts by calling smart contract instances using function names. To illustrate, if the function name is defined as *"get()"* and the instance name is *"myinstance1",* the smart contract is called using *"myinstance1.get()".* The method as per the present invention can be used to deploy smart contract applications in a plurality of blockchain networks such as Ethereum, Quorum, Hyperledger Fabric, NEO, QTUM, Cardano, etc., using traditional programming languages such as PHP, C# and Visual Basic.

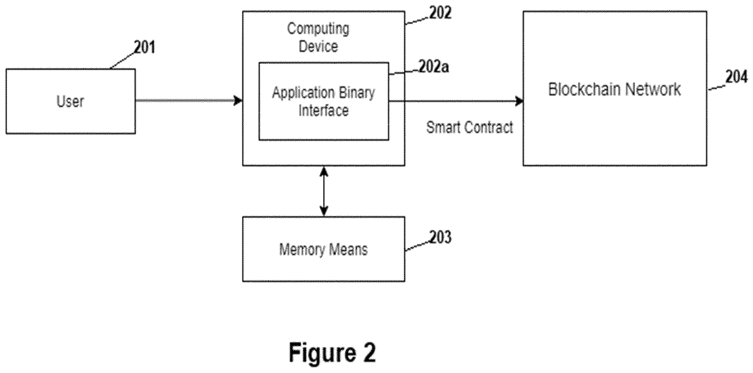

Figure 2 illustrates a schematic diagram of a system for deploying a smart contract to a blockchain network, as per a preferred embodiment of the present invention. The system comprises a computing device 202 and a memory means 203 operatively coupled to the computing device 202. The computing device 202 may be a personal computer, a portable device such as a tablet computer, a laptop, a smart phone, connected household device or any operating system based portable device. The operating system deployed on the computing device may be Windows, OSX, Linux, iOS, Android, or the like. The memory means 203 may be any internal or external device or web- based data storage mechanism adapted to store data.

The memory means 203 is adapted to store a plurality of instructions written in a programming language agnostic to the blockchain network. Said programming language includes all traditional programming languages which are not designed specifically to work with a particular blockchain network. Such traditional programming languages include scripting languages such as PHP or Visual Basic or object-oriented programming languages such as C#.

The computing device 202 is characterized by an application binary interface 202a. The application binary interface 202a is configured to receive the plurality of instructions inputted by a user 201 and to enable definition of a plurality of variable names and declare a plurality of variable types included in the plurality of instructions, define a plurality of function names included in the plurality of instructions, and define a plurality of variable names and declare a plurality of variable types outputted by the plurality of instructions. The application binary interface 202a provides means to define variable names and function names, and to declare variable types as illustrated in Figure 3 and Figure 4. The application binary interface 202a initiates a software module comprising a predefined set of special variable types which can be used for declaring special variable types included in instructions written in all traditional programming languages. This is to ensure that all variable types can be declared, irrespective of whether the used traditional programming language recognizes all variable types that are inputted, for example special variable types such as "block", "address", "balance", etc. included in the instructions.

The application binary interface 202a is further configured to convert the plurality of instructions to bytecode or opcode code compatible with the blockchain network and to generate the smart contract based on the bytecode or opcode code. The application binary interface 202a further provides means to select the blockchain network in which the user 201 intends to deploy the generated smart contract, The generated smart contract is thereafter deployed to the user selected blockchain network by the application binary interface 202a. The system and method as per the present invention is hence not tied to a blockchain network and can be used to deploy smart contracts in any programmable blockchain network such as Ethereum, Hyperledger Fabric, Quorum, NEO, QTUM, Cardano, etc..

Although the present invention has been described with reference to specific embodiments, this description is not meant to be construed in a limiting sense. Various modifications of the disclosed embodiments, as well as alternate embodiments of the subject matter, will become apparent to persons skilled in the art upon reference to the description of the subject matter. It is therefore contemplated that such modifications can be made without departing from the scope of the present invention as defined.

Further, a person ordinarily skilled in the art will appreciate that the various illustrative logical/functional blocks and process steps described in connection with the embodiments disclosed herein may be implemented as electronic hardware, or a combination of hardware and software. To clearly illustrate this interchangeability of hardware and a combination of hardware and software, various illustrations and steps have been described above, generally in terms of their functionality. Whether such functionality is implemented as hardware or a combination of hardware and software depends upon the design choice of a person ordinarily skilled in the art. Such skilled artisans may implement the described functionality in varying ways for each particular application, but such obvious design choices should not be interpreted as causing a departure from the scope of the present invention.

The process described in the present disclosure may be implemented using various means. For example, the apparatus described in the present disclosure may be implemented in hardware, firmware, software, or any combination thereof. For a hardware implementation, the processing units, or processors(s) or controller(s) may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, software codes may be stored in a memory and executed by a processor. Memory may be implemented within the processor unit or external to the processor unit. As used herein the term "memory" refers to any type of volatile memory or nonvolatile memory.

In the specification, the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A computing device implemented method for deploying a smart contract in a programmable blockchain network (204), the method comprising the steps of:
a) inputting (101) a plurality of instructions written in a programming language agnostic to the blockchain network (204), wherein the programming language is a traditional programming language which is not specifically designed for or tied to a blockchain network (204);
b) initializing (102) a software module (202a) comprising a predefined set of a plurality of special variable types which are not recognized by the programming language and which enables the deployment of the plurality of instructions in the blockchain network;
c) defining (103) a plurality of variables and declaring a plurality of variable types included in the plurality of instructions;
d) defining (104) a plurality of function names included in the plurality of instructions;
e) defining (105) a plurality of variables and declaring a plurality of variable types outputted by the plurality of instructions;
f) converting (106) the plurality of instructions comprising all defined variables and declared variable types to bytecode or operation code compatible with the blockchain network (204);
g) generating (107) the smart contract based on the bytecode or operation code; and
h) deploying (108) the generated smart contract in the blockchain network (204), $
wherein the predefined set of a plurality of special variable types can be used to declare the variable types.

2. The method as claimed in claim 1, wherein the programming language is a scripting language.

3. The method as claimed in claim 1, wherein the programming language is an object-oriented programming language.

4. The method as claimed in claim 1 to claim 3, wherein the programmable blockchain network is Ethereum.

5. The method as claimed in claim 1 to claim 3, wherein the programmable blockchain network in Quorum.

6. The method as claimed in claim 1 to claim 3, wherein the programmable blockchain network is Hyperledger Fabric.

7. The method as claimed in any of the preceding claims, wherein the plurality of special variable types include 'address', 'block' and 'balance'.

8. A system for deploying a smart contract in a programmable blockchain network (204), the system comprising:
a computing device (202); and
a memory means (203) operatively coupled to the computing device (202), the memory means adapted to store a plurality of instructions written in a programming language agnostic to the blockchain network (204), wherein the programming language is a traditional programming language which is not specifically designed for or tied to a blockchain network (204);
wherein the computing device (202) comprises an application binary interface (202a) configured to receive the plurality of instructions inputted by a user, initialize a software module comprising a predefined set of a plurality of special variable types which are not recognized by the programming language and which enables the deployment of the plurality of instructions in the blockchain network (204),
define a plurality of variable names and declare a plurality of variable types included in the plurality of instructions, define a plurality of function names included in the plurality of instructions, define a plurality of variables and declare a plurality of variable types outputted by the plurality of instructions, convert the plurality of instructions comprising all defined variables and declared variable types to byte-code or operation code compatible with the blockchain network (204),
generate the smart contract based on the byte-code or operation code, and deploy the generated smart contract to the blockchain network (204),
wherein the predefined set of a plurality of special variable types can be used to declare the variable types.

9. The system as claimed in claim 8, wherein the programming language is a scripting language.

10. The system as claimed in claim 8, wherein the programming language is an object-oriented programming language.

11. The system as claimed in claims 8 to 10, wherein the programmable blockchain network is Ethereum.

12. The system as claimed in claims 8 to 10, wherein the programmable blockchain network is Quorum.

13. The system as claimed in claims 8 to 10 , wherein the programmable blockchain network is Hyperledger Fabric.

14. The system as claimed in any of the preceding claims wherein the plurality of special variable types include 'address', 'block' and 'balance'.

## Patentansprüche

1. Von einem Computergerät implementiertes Verfahren zur Bereitstellung eines Smart Contracts in einem programmierbaren Blockchain-Netzwerk (204), wobei das Verfahren die folgenden Schritte umfasst:
a) Eingeben (101) einer Vielzahl von Anweisungen, die in einer von dem Blockchain-Netzwerk (204) unabhängigen Programmiersprache geschrieben sind, wobei die Programmiersprache eine herkömmliche Programmiersprache ist, die nicht speziell für ein Blockchain-Netzwerk (204) entwickelt oder auf dieses zugeschnitten ist;
b) Initialisieren (102) eines Softwaremoduls (202a), das einen vordefinierten Satz aus einer Vielzahl von speziellen Variablentypen umfasst, die von der Programmiersprache nicht erkannt werden und die Bereitstellung der Vielzahl von Anweisungen in dem Blockchain-Netzwerk ermöglichen;
c) Definieren (103) einer Vielzahl von Variablen und Festlegen einer Vielzahl von Variablentypen, die in der Vielzahl von Anweisungen enthalten sind;
d) Definieren (104) einer Vielzahl von Funktionsnamen, die in der Vielzahl von Anweisungen enthalten sind;
e) Definieren (105) einer Vielzahl von Variablen und Festlegen einer Vielzahl von Variablentypen, die von der Vielzahl von Anweisungen ausgegeben werden;
f) Umwandeln (106) der Vielzahl von Anweisungen, die alle definierten Variablen und festgelegten Variablentypen umfassen, zu Bytecode oder Operationscode, der mit dem Blockchain-Netzwerk (204) kompatibel ist;
g) Erzeugen (107) des Smart Contracts basierend auf dem Bytecode oder dem Operationscode; und
h) Bereitstellen (108) des erzeugten Smart Contracts in dem Blockchain-Netzwerk (204),
wobei der vordefinierte Satz aus einer Vielzahl von speziellen Variablentypen verwendet werden kann, um die Variablentypen festzulegen.

2. Verfahren nach Anspruch 1, wobei die Programmiersprache eine Skriptsprache ist.

3. Verfahren nach Anspruch 1, wobei die Programmiersprache eine objektorientierte Programmiersprache ist.

4. Verfahren nach Anspruch 1 bis 3, wobei es sich bei dem programmierbaren Blockchain-Netzwerk um Ethereum handelt.

5. Verfahren nach Anspruch 1 bis Anspruch 3, wobei es sich bei dem programmierbaren Blockchain-Netzwerk um Quorum handelt.

6. Verfahren nach Anspruch 1 bis 3, wobei es sich bei dem programmierbaren Blockchain-Netzwerk um Hyperledger Fabric handelt.

7. Verfahren nach einem der vorhergehenden Ansprüche, wobei die Vielzahl von speziellen Variablentypen ,Adresse', ,Block' und 'Stand' beinhalten.

8. System zur Bereitstellung eines Smart Contracts in einem programmierbaren Blockchain-Netzwerk (204), das System umfassend:
ein Computergerät (202); und
ein Speichermittel (203), das mit dem Computergerät (202) operativ gekoppelt ist,
wobei das Speichermittel dafür ausgelegt ist, eine Vielzahl von Anweisungen zu speichern, die in einer von dem Blockchain-Netzwerk (204) unabhängigen Programmiersprache geschrieben sind, wobei die Programmiersprache eine herkömmliche Programmiersprache ist, die nicht speziell für ein Blockchain-Netzwerk (204) entwickelt oder auf dieses zugeschnitten ist;
wobei das Computergerät (202) eine Anwendungsbinärschnittstelle (202a) umfasst, die konfiguriert ist, die Vielzahl von Anweisungen zu empfangen, die von einem Benutzer eingegeben werden, ein Softwaremodul zu initialisieren, das einen vordefinierten Satz aus einer Vielzahl von speziellen Variablentypen umfasst, die von der Programmiersprache nicht erkannt werden und die Bereitstellung der Vielzahl von Anweisungen in dem Blockchain-Netzwerk (204) ermöglichen,
eine Vielzahl von Variablennamen zu definieren und eine Vielzahl von Variablentypen festzulegen, die in der Vielzahl von Anweisungen enthalten sind, eine Vielzahl von Funktionsnamen zu definieren, die in der Vielzahl von Anweisungen enthalten sind, eine Vielzahl von Variablen zu definieren und eine Vielzahl von Variablentypen festzulegen, die durch die Vielzahl von Anweisungen ausgegeben werden, die Vielzahl von Anweisungen, die alle definierten Variablen und festgelegten Variablentypen umfassen, zu Bytecode oder Operationscode umzuwandeln, der mit dem Blockchain-Netzwerk (204) kompatibel ist, den Smart Contract basierend auf dem Bytecode oder dem Operationscode zu erzeugen, und den erzeugten Smart Contract in dem Blockchain-Netzwerk (204) bereitzustellen,
wobei der vordefinierte Satz aus einer Vielzahl von speziellen Variablentypen verwendet werden kann, um die Variablentypen festzulegen.

9. System nach Anspruch 8, wobei die Programmiersprache eine Skriptsprache ist.

10. System nach Anspruch 8, wobei die Programmiersprache eine objektorientierte Programmiersprache ist.

11. System nach Anspruch 8 bis 10, wobei es sich bei dem programmierbaren Blockchain-Netzwerk um Ethereum handelt.

12. System nach Anspruch 8 bis 10, wobei es sich bei dem programmierbaren Blockchain-Netzwerk um Quorum handelt.

13. System nach Anspruch 8 bis 10, wobei es sich bei dem programmierbaren Blockchain-Netzwerk um Hyperledger Fabric handelt.

14. System nach einem der vorhergehenden Ansprüche, wobei die Vielzahl von speziellen Variablentypen ,Adresse', ,Block' und 'Stand' beinhalten.

## Revendications

1. Procédé mis en œuvre par un dispositif informatique pour déployer un contrat intelligent dans un réseau blockchain programmable (204), le procédé comprenant les étapes de :
a) la saisie (101) d'une pluralité d'instructions écrites dans un langage de programmation indépendant du réseau blockchain (204), dans lequel le langage de programmation est un langage de programmation traditionnel qui n'est pas spécifiquement conçu pour un réseau blockchain (204) ou lié à celui-ci ;
b) l'initialisation (102) d'un module logiciel (202a) comprenant un ensemble prédéfini d'une pluralité de types de variables spéciales qui ne sont pas reconnus par le langage de programmation et qui permettent le déploiement de la pluralité d'instructions dans le réseau blockchain ;
c) la définition (103) d'une pluralité de variables et la déclaration d'une pluralité de types de variables inclus dans la pluralité d'instructions ;
d) la définition (104) d'une pluralité de noms de fonction inclus dans la pluralité d'instructions ;
e) la définition (105) d'une pluralité de variables et la déclaration d'une pluralité de types de variables produites en sortie par la pluralité d'instructions ;
f) la conversion (106) de la pluralité d'instructions comprenant toutes les variables définies et les types de variables déclarées en code à octets ou en code d'opération compatible avec le réseau blockchain (204) ;
g) la génération (107) du contrat intelligent sur la base du code à octets ou du code d'opération ; et
h) le déploiement (108) du contrat intelligent généré dans le réseau blockchain (204),
dans lequel l'ensemble prédéfini d'une pluralité de types de variables spéciales peut être utilisé pour déclarer les types de variables.

2. Procédé selon la revendication 1, dans lequel le langage de programmation est un langage de script.

3. Procédé selon la revendication 1, dans lequel le langage de programmation est un langage de programmation orienté objet.

4. Procédé selon la revendication 1 à la revendication 3, dans lequel le réseau blockchain programmable est Ethereum.

5. Procédé selon la revendication 1 à la revendication 3, dans lequel le réseau blockchain programmable dans Quorum.

6. Procédé selon la revendication 1 à la revendication 3, dans lequel le réseau blockchain programmable est Hyperledger Fabric.

7. Procédé selon l'une quelconque des revendications précédentes, dans lequel la pluralité de types de variables spéciales comporte « adresse », « bloc » et « solde ».

8. Système de déploiement d'un contrat intelligent dans un réseau blockchain programmable (204), le système comprenant :
un dispositif informatique (202) ; et
un moyen de mémoire (203) couplé de manière fonctionnelle au dispositif informatique (202),
le moyen de mémoire adapté à un stockage d'une pluralité d'instructions écrites dans un langage de programmation indépendant du réseau blockchain (204), dans lequel le langage de programmation est un langage de programmation traditionnel qui n'est pas spécifiquement conçu pour un réseau blockchain (204) ou lié à celui-ci ;
dans lequel le dispositif informatique (202) comprend une interface binaire d'application (202a) configurée pour recevoir la pluralité d'instructions saisies par un utilisateur, initialiser un module logiciel comprenant un ensemble prédéfini d'une pluralité de types de variables spéciales qui ne sont pas reconnus par le langage de programmation et qui permet le déploiement de la pluralité d'instructions dans le réseau blockchain (204),
définir une pluralité de noms de variables et déclarer une pluralité de types de variables inclus dans la pluralité d'instructions, définir une pluralité de noms de fonctions inclus dans la pluralité d'instructions, définir une pluralité de variables et déclarer une pluralité de types de variables sorties par la pluralité d'instructions, convertir la pluralité d'instructions comprenant toutes les variables définies et les types de variables déclarées en code à octets ou code d'opération compatible avec le réseau blockchain (204), générer le contrat intelligent sur la base du code à octets ou du code d'opération, et déployer le contrat intelligent généré vers le réseau blockchain (204),
dans lequel l'ensemble prédéfini d'une pluralité de types de variables spéciales peut être utilisé pour déclarer les types de variables.

9. Système selon la revendication 8, dans lequel le langage de programmation est un langage de script.

10. Système selon la revendication 8, dans lequel le langage de programmation est un langage de programmation orienté objet.

11. Système selon les revendications 8 à 10, dans lequel le réseau blockchain programmable est Ethereum.

12. Système selon la revendication 8 à la revendication 10, dans lequel le réseau blockchain programmable est Quorum.

13. Système selon la revendication 8 à la revendication 10, dans lequel le réseau blockchain programmable est Hyperledger Fabric.

14. Système selon l'une quelconque des revendications précédentes, dans lequel la pluralité de types de variables spéciales comporte « adresse », « bloc » et « solde ».
